Europäisches Patentamt

European Patent Office

Office européen des brevets

'⑪ Publication number: **0 196 147**
**B1**

# EUROPEAN PATENT SPECIFICATION

(45) Date of publication of patent specification: 05.04.89

(51) Int. Cl.⁴: **B 62 D 65/00,** B 60 G 15/06

(21) Application number: 86300154.1

(22) Date of filing: 13.01.86

(54) **Method of manufacturing vehicles.**

(30) Priority: 27.03.85 GB 8507936

(43) Date of publication of application:
01.10.86 Bulletin 86/40

(45) Publication of the grant of the patent:
05.04.89 Bulletin 89/14

(84) Designated Contracting States:
AT BE CH DE FR GB IT LI NL SE

(56) References cited:
GB-A-2 007 610
GB-A-2 136 330
US-A-3 694 890

(73) Proprietor: FORD MOTOR COMPANY LIMITED
Eagle Way
Brentwood Essex CM13 3BW (GB)
㊼ BE CH GB IT LI

(73) Proprietor: FORD-WERKE
AKTIENGESELLSCHAFT
Ottoplatz 2 Postfach 21 03 69
D-5000 Köln 21 (DE)
㊼ DE

(73) Proprietor: FORD FRANCE SOCIETE ANONYME
344 Avenue Napoléon Bonaparte B.P. 307
F-92506 Rueil Malmaison Cedex (FR)
㊼ FR

(72) Inventor: Selman, Alan
520 Woodgrange Drive
Southend on Sea Essex (GB)

(74) Representative: Messulam, Alec Moses et al
A. Messulam & Co. 24 Broadway
Leigh on Sea Essex SS9 1BN (GB)

## Description

The present invention relates to a method of manufacturing two vehicle derivatives with different front suspension using shared manufacturing facilities.

Because of the high level of investment required to establish the tooling and other facilities needed to manufacture a vehicle, it is highly desirable to be able to utilize the same facilities for the manufacture of as wide a range of different vehicle derivatives as possible.

A light van of about one tonne load carrying capacity ideally requires an independent front suspension for car-like ride and handling whereas a heavier van requires a heavy duty beam axle front suspension. These conflicting requirements have hitherto inhibited the use of a common body structure assembled on common facilities for heavy and light duty van derivatives.

According to the present invention, there is provided a method of manufacturing independent front suspension (IFS) and front beam axle vehicle derivatives using shared facilities, characterised in that:

a) assembly of the beam axle derivative includes connecting leaf spring front bushes of a beam axle suspension to forward location points on a body structure; and

b) assembly of the IFS derivative includes connecting a subframe having mounting points for front wheel locating means of a Macpherson strut type front suspension to common forward location points on a similar body structure to the beam axle derivative body structure.

The Macpherson strut type suspension may be a conventional Macpherson strut, with the shock absorber and the spring concentric, but it is preferred to use a hybrid Macpherson strut where the spring is mounted in board of the shock absorber and supported by the track control arm.

The invention will now be described, by way of example, with reference to the accompanying drawings, in which:

Figure 1 is a perspective cutaway drawing of the forward structure of an IFS vehicle made by the method of the invention;

Figure 2 is similar cutaway perspective view of the forward structure of a beam axle front suspension derivative of the vehicle shown in Figure 1;

Figure 3 is a side view of the front suspension of the IFS vehicle shown in Figure 1.

Figure 4 is a side view of the front suspension of the beam axle vehicle shown in figure 2; and

Figure 5 is a composite front view showing, to the left of the centre line, a section of the beam axle suspension along the line Vb-Vb of Figure 4, and to the right of the centre line, a section of the IFS derivative along the line Va-Va of Figure 3.

The method of manufacturing a vehicle in accordance with the invention involves the assembly of different derivatives of the same basic vehicle using a substantial number of common parts and common dimensions to enable use of common manufacturing facilities.

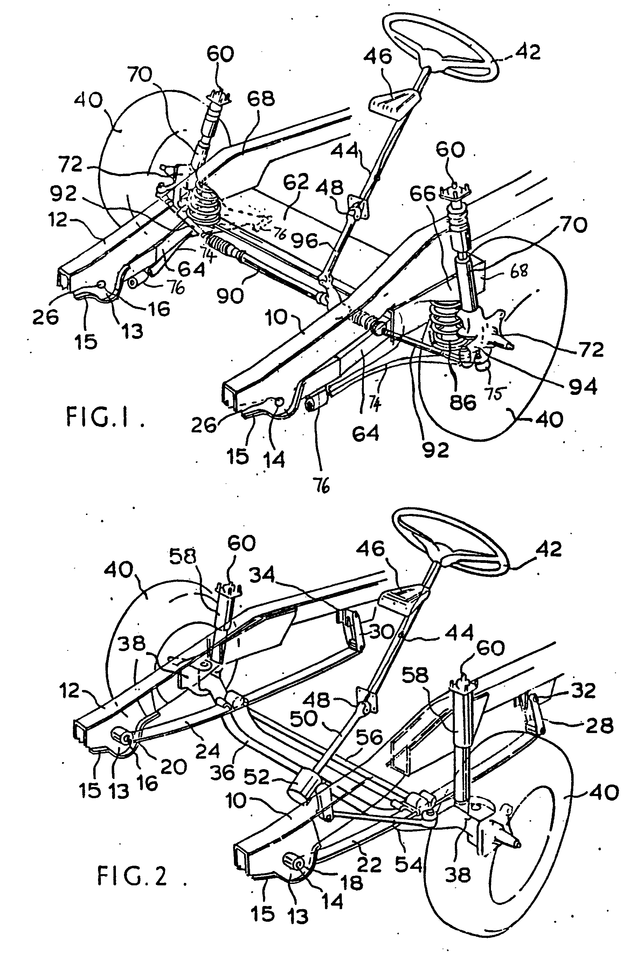

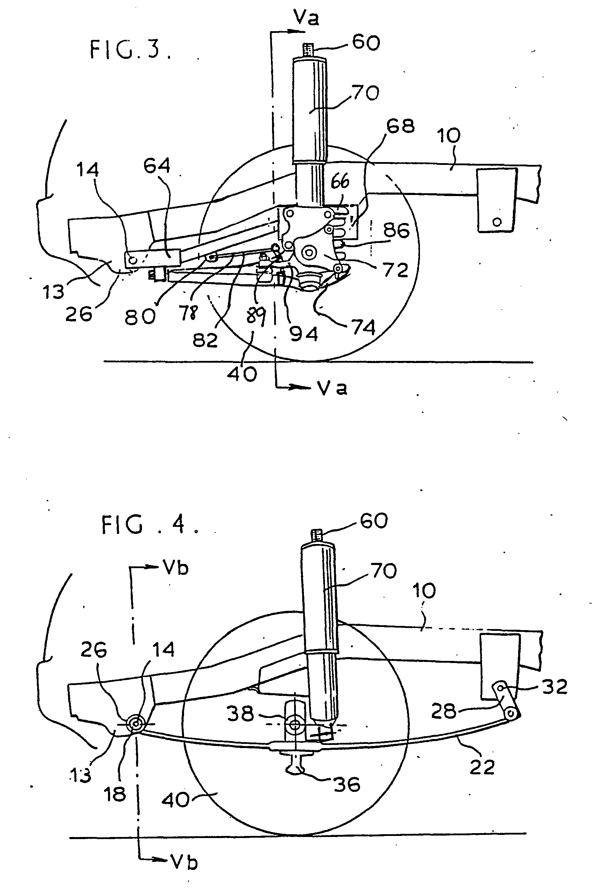

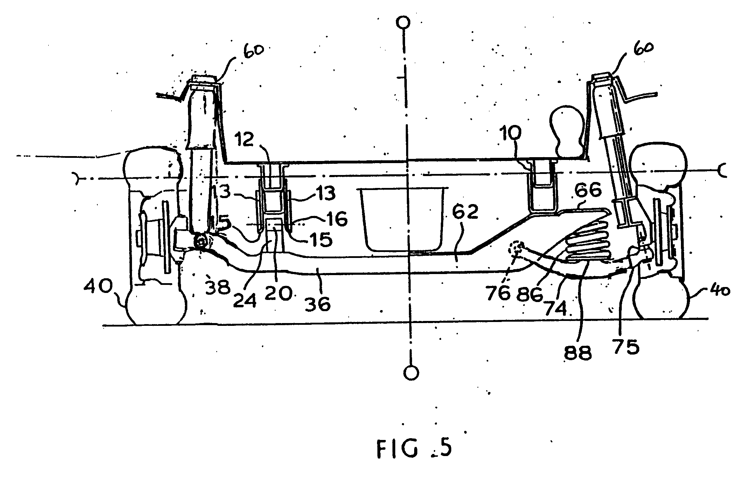

Figures 2, 4 and the left hand side of Figure 5 show the front body structure, front suspension and steering of a two tonne payload van. The body structure includes parallel longitudinal frame members 10 and 12, of channel section. Each frame member 10 has downwardly extending plates 13 welded to either side of its forward end to form mounting points 14 and 16. The downwardly extending plates 13 are reinforced by flanges 15. Transversely extending bolts 26 connect forward mounting bushes 18, 20 of front leaf springs 22, 24 to the forward mounting points 14, 16.

The ends of the leaf springs 22, 24 are connected by shackles 28, 30 to mounting points 32, 34 on frame members 10 and 12. A beam axle 36 is mounted on the leaf springs 22, 24. Hubs 38 carrying road wheels 40 are pivotally connected to either end of the beam axle.

A steering wheel 42 is mounted on an upper steering shaft 44 supported on the vehicle body structure by a bracket 46. A universal joint 48 and lower steering shaft 50 connect the upper steering shaft to a recirculating ball steering gear 52. The left hand hub 38 is connected to the steering gear 52 by a steering rod 54 and to the other hub by a track rod 56.

Shock absorbers 58 have their lower ends mounted on the beam axle 36 and connect the axle to the vehicle body structure through upper shock absorber mounting points 60.

Figures 1, 3 and the right hand side of Figure 5 show the front structure, front suspension and steering of a one tonne payload van having a number of parts and hardpoints in common with the two tonne derivative shown in the other figures. The common parts and hardpoints are given the same reference numerals.

The body structure includes parallel longitudinally extending frame members 10 and 12 which are substantially the same as those used for the beam axle derivative. A subframe 62 has forward extending arms 64 of inverted channel section received within the frame members 10, 12 and connected to the forward mounting points 14, 16 by transversely extending bolts 26. The rear part of the subframe 62 is formed with upper spring seat portions 66 connected by reinforcing brackets 68 to frame members 10 and 12.

The one tonne payload derivative is fitted with a hybrid Macpherson strut independent front suspension comprising shock absorber struts 70 each having a hub 72 fixed to its lower end, and having its upper end connected to the same shock absorber mounting point 60 as is used for the beam axle derivative. Each front road wheel 40 is located laterally by a track control arm 74 connected to the subframe 62 by two pivot bushes 76 and to the corresponding hub 72 by a ball joint 75. One of the pivot bushes is connected substantially in line with the road wheel and one at the front end of the subframe forward arm.

A torsion bar 78 (not shown in Figure 1) extends through bushes 80 fixed to the forward arms 64 of the subframe 62 and has rearwardly extending end portions 82 connected to the track control arm 74 by vertical links 89.

Suspension springs 86 each act between a lower spring seat 88 on the track control arm 74 and an upper spring seat portion 66 of the subframe 62, so that the spring loads are transmitted to the subframe and through the subframe mounting points to the frame members 10 and 12.

The steering system of the one tonne payload derivative includes a rack and pinion steering gear 90 mounted on the subframe 62 and connected by steering rods 92 to steering arms 94 of the hubs 72. A lower steering shaft 96 connects the steering gear 90 to a universal joint 48 and above this point the same parts are used as in the two tonne payload derivative.

The common points used in both derivatives are

a) the front locating points defined by the axis of the bolts 26

b) the shock absorber mounting points 60, and

c) the steering column universal joint 48.

## Claims

1. A method of manufacturing independent front suspension (IFS) and front beam axle vehicle derivatives using shared facilities, characterised in that:

a) assembly of the beam axle derivative includes connecting leaf spring front bushes (18, 20) of a beam axle suspension to forward location points (14, 16) on a body structures; and

b) assembly of the IFS derivative includes connecting a subframe (62, 64) having mounting points (76) for front wheel locating means (74) of a Macpherson strut type front suspension to common forward location points (14, 16) on a similar body structure to the beam axle derivative body structure.

2. A vehicle manufacturing method as claimed in Claim 1, where a hybrid Macpherson strut front suspension is used for the IFS derivative, with the spring (86) being arranged between the front wheel locating means (74) and the subframe (62, 64) and the upper end of the shock absorber strut (70) being attached directly to the body structure.

3. A vehicle manufacturing method as claimed in Claim 1 or Claim 2, characterised in that shock absorbers (53) for the beam axle derivative are connected to upper mounting points (60) on the body structure of the beam axle derivative at the same relative positions as the shock absorbers (70) of the IFS derivative.

4. A vehicle manufacturing method as claimed in any preceding claim, characterised in that a common steering column (44) is fitted to both IFS and beam axle derivatives.

5. A method of manufacturing IFS and front beam axle vehicle derivatives using shared facilities substantially as hereinbefore described with reference to and as shown in the accompanying drawings.

6. An IFS vehicle made by the method of any one of the preceding claims.

7. A front beam axle vehicle made by the method of any one of the claims 1 to 5.

## Patentansprüche

1. Verfahren zur Herstellung der Fahrzeugbaugruppen Fronteinzelradaufhängung (ERA) und Frontträgerachse unter Verwendung derselben Ausrüstung, dadurch gekennzeichnet, dass:

a) der Zusammenbau der Baugruppe Trägerachse das Verbinden der Frontblattfederbuchse, (18, 20) einer Trägerachsenaufhängung mit vorderen Montagestellen (14, 16) auf einer Karosseriekonstruktion beinhaltet; und

b) der Zusammenbau der Baugruppe ERA das Verbinden eines Unterbaus (62, 64) mit Befestigungsstellen (76) für die Montagevorrichtung (74) der Vorderräder einer Frontaufhängung der Art eines MacPherson oder eines mit gemeinsamen vorderen Montagestellen (14, 16) auf einer Karosseriekonstruktion ähnlich der Karosseriekonstruktion der Baugruppe Trägerachse beinhaltet.

2. Verfahren zur Herstellung eines Fahrzeugs nach Anspruch 1, worin eine hybride Frontaufhängung der Art eines MacPhersonfederbeines für die Baugruppe ERA verwendet wird, wobei die Feder (86) zwischen der Montagevorrichtung (74) der Vorderräder und dem Unterbau (62, 64) angeordnet und das obere Ende des Stossdämpfungsstrebe (70) unmittelbar an der Karosseriekonstruktion angebracht ist.

3. Verfahren zur Herstellung eines Fahrzeugs nach Anspruch 1 oder Anspruch 2, dadurch gekennzeichnet, dass die Stossdämpfer (53) für die Baugruppe Trägerachse mit oberen Montagestellen (60) an der Karosseriekonstruktion der Baugruppe Trägerachse in denselben relativen Stellungen verbunden sind wie die Stossdämpfer (70) der Baugruppe ERA.

4. Verfahren zur Herstellung eines Fahrzeugs nach einem der vorhergehenden Ansprüche, dadurch gekennzeichnet, dass eine gemeinsame Lenksäule (44) sowohl an der Baugruppe ERA als auch an der Baugruppe Trägerachse befestigt ist.

5. Verfahren zur Herstellung der Fahrzeugbaugruppen ERA und Frontträgerachse unter Verwendung derselben Ausrüstung im wesentlichen wie oben mit Bezug auf die Befleitzeichnungen beschrieben und wie darin dargestellt.

6. Fahrzeug mit ERA, hergestellt durch das Verfahren nach einem der vorhergehenden Ansprüche.

7. Fahrzeug mit Frontträgerachse, hergestellt durch das Verfahren nach einem der Ansprüche 1 bis 5.

## Revendications

1. Procédé de fabrication de dérivés de véhicule à suspension avant à roues indépendantes (IFS) et à essieu avant rigide, par mise en oeuvre d'installations communes, caractérisé en ce que:

a) le montage du dérivé à essieu rigide comprend le raccordement de coussinets avant (18, 20) de ressort à lame de la suspension de l'essieu rigide à des points avant (14, 16) de la structure du châssis, et

b) le montage du dérivé IFS comprend le raccordement d'un châssis auxiliaire (62, 64) ayant des points de montage (76) de dispositifs (74) de positionnement d'une suspension avant de type Macpherson aux points avant communs (14, 16) sur une structure de châssis analogue à la structure du châssis du dérivé à essieu rigide.

2. Procédé de fabrication de véhicules selon la revendication 1, dans lequel la suspension avant à jambe Macpherson hybride est utilisée pour le dérivé IFS, le ressort (86) étant placé entre le dispositif (74) de positionnement de roue avant et le châssis auxiliaire (62, 64), l'extrémité du montant d'amortisseur de choc (70) étant directement fixé à la structure du châssis.

3. Procédé de fabrication de véhicules selon la revendication 1 ou 2, caractérisé en ce que les amortisseurs (53) du dérivé à essieu rigide sont raccordés à des points supérieurs de montage (60) placés sur la structure du châssis du dérivé à essieu rigide, dans les mêmes positions relatives que les amortisseurs (70) du dérivé IFS.

4. Procédé de fabrication de véhicules selon l'une quelconque des revendications précédentes, caractérisé en ce qu'une colonne commune de direction (44) est montée à la fois dans les dérivés IFS et à essieu rigide.

5. Procédé de fabrication de dérivés de véhicule de type IFS et à essieu avant rigide, par mise en oeuvre d'installations communes, pratiquement tel que décrit précédemment en référence aux dessins annexés et comme représenté sur ces dessins.

6. Véhicule IFS réalisé par mise en oeuvre du procédé selon l'une quelconque des revendications précédentes.

7. Véhicule à essieu avant rigide fabriqué par le procédé selon l'une quelconque des revendications 1 à 5.

FIG.1.

FIG.2.

FIG. 3.

FIG . 4 .

FIG .5